# EUROPÄISCHE PATENTSCHRIFT

(11) **EP 1 638 830 B1**
(45) Veröffentlichungstag und Bekanntmachung des Hinweises auf die Patenterteilung: **19.09.2007**
(21) Anmeldenummer: 04725015.4
(22) Anmeldetag: 01.04.2004
(51) Int. Cl.: B60T 13/74

(54) **ELEKTROMECHANISCHER BREMSKRAFTVERSTÄRKER**
ELECTROMECHANICAL SERVOBRAKE
SERVO-FREIN ELECTROMECANIQUE

(30) Priorität: 18.06.2003 DE 10327553
(43) Veröffentlichungstag der Anmeldung: 29.03.2006
(73) Patentinhaber: Volkswagen Aktiengesellschaft, 38436 Wolfsburg (DE)
(72) Erfinder: WITTE, Bastian, 38179 Gross-Schwülper (DE)
(74) Vertreter: Beck, Michael Rudolf
(86) Internationale Anmeldenummer: PCT/EP2004/003482
(87) Internationale Veröffentlichungsnummer: WO 2004/110840

(56) Entgegenhaltungen:
- EP-A- 1 081 004
- EP-A- 1 096 356
- US-A- 4 812 723
- US-A- 4 858 436
- US-A- 5 927 821
- US-A1- 2002 158 510
- US-A1- 2003 024 245
- US-B1- 6 220 675
- PATENT ABSTRACTS OF JAPAN Bd. 1998, Nr. 10, 31. August 1998 (1998-08-31) & JP 10 138910 A (UNISIA JECS CORP), 26. Mai 1998 (1998-05-26)
- PATENT ABSTRACTS OF JAPAN Bd. 0103, Nr. 42 (M-536), 19. November 1986 (1986-11-19) & JP 61 143253 A (SUMITOMO ELECTRIC IND LTD), 30. Juni 1986 (1986-06-30)

## Beschreibung

Die Erfindung bezieht sich auf einen elektromechanischen Bremskraftverstärker, umfassend eine Kolbenstange zur direkten Verbindung eines Bremspedals mit einem Kolben eines Hauptbremszylinders, einen elektrischen Motor mit einem Stator und einem Rotor, die konzentrisch um die Kolbenstange angeordnet sind, und einen Spindeltrieb mit einer drehfest gelagerten, axial bewegbaren Spindelschraube, welche über den Rotor des Motors angetrieben ist und bei Aktivierung des Motors zur Bremskraftverstärkung gegen einen Mitnehmer anläuft und diesen in Richtung des Hauptbremszylinders drückt.

Zum Bremsen schwerer Fahrzeuge reicht die Fußkraft des Fahrers nicht aus, so daß diese üblicherweise mit einem Bremskraftverstärker ausgerüstet werden. Bremskraftverstärker arbeiten in der Regel mit einem vom Verbrennungsmotor erzeugten Unterdruck. Dabei wird die Druckdifferenz zwischen dem Motordruck und dem Umgebungsdruck genutzt, um zusätzlich zur Fußkraft des Fahrers eine Verstärkungskraft auf die Kolbenstange aufzubringen.

Mit zunehmender Fahrzeugmasse steigt gleichzeitig der Durchmesser des Bremskraftverstärkers. Bei sehr schweren Fahrzeugen werden Tandem-Bremskraftverstärker eingesetzt. Übliche Bremskraftverstärker weisen einen Durchmesser von 8 bis 10 Zoll, also bis zu 26 cm auf, sind folglich sehr voluminös und schränken den Platz im Motorraum für andere Bauteile ein.

Bei Dieselmotoren, modernen direkteinspritzenden FSI-Motoren, oder Valvetronic-Motoren steht jedoch praktisch kein Unterdruck am Motor zur Verfügung. Deswegen werden bei diesen Motoren elektrische oder vom Verbrennungsmotor angetriebene Unterdruckpumpen eingesetzt. Diese und die notwendige Verschlauchung benötigen jedoch Bauraum, erhöhen das Fahrzeuggewicht und sind im Hinblick auf die Fertigung und Montage aufwendig.

Ziel der Erfindung ist es, einen für alle Antriebsvarianten einheitlichen Bremskraftverstärker zu entwickeln, der keinen Unterdruck benötigt und wesentlich kompakter, leichter und preisgünstiger baut, als heutige Unterdruck-Bremskraftverstärker mitsamt Bremsassistent, Unterdruckpumpe, Verschlauchung und Unterdrucksensor. Dabei wird angestrebt, die Verstärkungskraft elektrisch aus dem Fahrzeugbordnetz zu erzeugen, d. h. einen elektromechanischen Bremskraftverstärker zu schaffen.

Elektromechanische Bremskraftverstärker sind per se schon seit langem aus dem Stand der Technik bekannt. So wird beispielsweise bereits in der DE 30 31 643 C2 ein elektromechanischer Bremskraftverstärker beschrieben, bei dem die Hilfskraft über einen Schneckenantrieb auf eine mit der Kolbenstange koppelbare Kupplungshälfte aufgebracht wird. Durch die in dem Bremskraftverstärker benötigte Kupplung ergibt sich ein komplizierter Aufbau. Da überdies der Elektromotor neben dem Getriebe angeordnet ist, das die Antriebskraft auf die Kolbenstange überträgt, weist dieser bekannte Bremskraftverstärker zudem große Außenabmessungen auf.

Kompaktere Abmessungen ergeben sich bei den in der DE 199 36 433 A1 und der DE 100 57 557 A1 offenbarten Bremskraftverstärkern, welche jeweils einen zur Kolbenstange koaxialen Linearantrieb einsetzen. Das wesentliche Konstruktionsprinzip bei dem Bremskraftverstärker nach der DE 100 57 557 A1 besteht darin, einen translatorisch verschiebbaren Anker vorzusehen, wobei die magnetischen Feldlinien parallel zur Kraftrichtung verlaufen und direkt den Anker gegen den Bremskolben drücken. Alternativ wird die Verwendung eines translatorischen Schrittmotors beschrieben. Es erscheint jedoch zweifelhaft, ob derartige Antriebe imstande sind, die erforderlichen Verstärkungskräfte zu erzeugen. Ein etwaiges Zwischengetriebe zur Krafterhöhung wird dort jedenfalls nicht in Erwägung gezogen.

Weiterhin ist aus der DE 199 39 950 A1 ein elektromechanischer Bremskraftverstärker der eingangs genannten Art bekannt. Dieser bildet zusammen mit dem angeschlossenen Hauptbremszylinder eine Einheit, und ist auf den Einsatz bei einem Hybrid-Fahrzeug mit einer regenerativen Bremsvorrichtung abgestimmt. Zudem besitzt der Bremskraftverstärker einen verhältnismäßig großen Durchmesser.

Ein elektromechanischer Bremskraftverstärker gemäß dem Oberbegriff von Anspruch 1 ist aus der US 4 858 436 A bekannt.

Davon ausgehend liegt der Erfindung die Aufgabe zugrunde, einen elektromechanischen Bremskraftverstärker der eingangs genannten Art unter verschiedenen Gesichtspunkten weiter zu optimieren. Dabei muß in jedem Fall ein kompakter, einfacher Aufbau gewährleistet bleiben.

Zur Lösung dieser Aufgabe wird ein elektromechanischer Bremskraftverstärker mit den Merkmalen von Patentanspruch 1 vorgeschlagen, der sich vorzugsweise dadurch auszeichnet, daß die Ansteuerung des Motors in Abhängigkeit eines Crashsensors derart vorgenommen ist, daß bei einem Signal des Crashsensors der Motor aktiviert wird.

Durch die Einbeziehung eines Signals eines Crashsensors in die Ansteuerung des Motors wird die Crashsicherheit erhöht. Bei einem Unfall wird über den Crashsensor der Motor aktiviert, so daß das Bremspedal vom Fahrer weggezogen und damit die Verletzungsgefahr vermindert wird. Zudem kann hierdurch die Bremskraft erhöht und gegebenenfalls über den Zeitpunkt des Aufpralls für eine gewisse Zeit aufrechterhalten werden. Da die meisten Kraftfahrzeuge heute mit Airbagsystemen ausgerüstet sind, lassen sich die hierfür vorgesehenen Crashsensoren zusätzlich für das Zurückziehen des Bremspedals nutzen. Damit wird ohne großen Aufwand ein zusätzlicher Nutzen aus dem Vorhandensein eines elektromechanischen Bremskraftverstärkers gezogen.

Vorzugsweise wird in diesem Zusammenhang ein Niederdruckspeicher einer ABS/ESP-Einheit als Druckspeicher genutzt. Dies hat den Vorteil, daß das Druckmedium des Hauptbremszylinders leichter verdrängt wird, so daß sich das Bremspedal im Crashfall weiter nach vom und damit vom Fahrer weg schwenken läßt.

Weitere vorteilhafte Ausgestaltungen der Erfindung sind in den Ansprüchen angegeben.

Die Ansteuerung des elektromechanischen Bremskraftverstärkers wird vorzugsweise in ein ESP-Steuergerät integriert, und zwar unabhängig davon, ob nun eine Steuerung oder Regelung vorgesehen wird. Vorzugsweise werden die notwendigen Berechnungen zur Ansteuerung des Elektromotors von einem der Prozessoren des ESP-Steuergeräts vorgenommen. Es ist jedoch möglich, die Ansteuerung des elektromechanischen Bremskraftverstärkers in ein eigenes, modulares Steuergerät zu implementieren.

Gemäß einer weiteren, vorteilhaften Ausgestaltung der Erfindung ist der verwendete Spindeltrieb selbsthemmungsfrei. Bei einem Ausfall des Elektromotors kann hierdurch eine Rückstellung des Bremspedals erfolgen.

Dazu kann eine eigene Rückstellfederfeder vorgesehen werden, welche die Spindelschraube in ihre Ausgangsposition zurückdrückt. Bevorzugt wird jedoch die Rückstellkraft für den Spindeltrieb allein durch den hydraulischen Gegendruck des Hauptbremszylinders und eine Pedalrückholfeder erzeugt, wodurch der Aufbau des Bremskraftverstärkers einfach bleibt.

Als Spindeltrieb kann beispielsweise ein Rollen-Gewindetrieb oder auch ein Kugel-Gewindetrieb vorgesehen werden.

In einer vorteilhaften Ausgestaltung der Erfindung kommt ein bürstenfreier Motor zum Einsatz. Hierdurch lassen sich die Außenabmessungen des erfindungsgemäßen Bremskraftverstärkers gegenüber der in der DE 199 39 950 A1 vorgeschlagenen Lösung erheblich verringern.

Vorzugsweise kommt ein Motor zum Einsatz, bei dem der Rotor mindestens einen Permanentmagnet und der Stator mindestens eine bestrombare Spule aufweist. Ein solcher Motor baut außerordentlich kompakt und weist darüber hinaus eine niedrige rotierende Masse auf, so daß die Verstärkungskraft sehr schnell wirksam wird.

Die Ansteuerung des Elektromotors kann über eine einfache Steuerung oder über ein Regelsystem erfolgen. Im erstgenannten Fall ist an dem Bremskraftverstärker oder auch am Bremspedal ein Sensor zum Erfassen der an der Kolbenstange wirksamen Pedalkraft vorgesehen. Der Strom des Elektromotors wird mit einem Verstärkungsfaktor zum Beispiel proportional zur erfaßten Pedalkraft eingestellt.

Im Falle einer Regelung ist neben einem Sensor zum Erfassen der an der Kolbenstange wirksamen Pedalkraft weiterhin ein Sensor zum Erfassen der Ist-Summenkraft aus der Pedalkraft und der Verstärkungskraft vorgesehen. Aus der Pedalkraft wird dann ein Sollwert für die Summenkraft errechnet. Die Differenz zu der erfaßten Ist-Summenkraft wird über den Elektromotor ausgeregelt.

Dabei kann die Ist-Summenkraft unmittelbar an der Kolbenstange mit einem Sensor gemessen werden. Alternativ hierzu ist es auch möglich, die Ist-Summenkraft aus einem erfaßten ESP-Vordruck zu berechnen.

Weiterhin kann der Verstärkungsfaktor in Abhängigkeit der Fahrgeschwindigkeit variabel eingestellt werden, und zwar derart, daß bei niedriger Fahrgeschwindigkeit die Verstärkung kleiner und bei hoher Fahrgeschwindigkeit die Verstärkung höher ist. Auf diese Weise wird beispielsweise beim Rangieren ein feinfühligeres Ansprechen der Bremse erzielt.

Zudem kann der Verstärkungsfaktor an die Beladung des Fahrzeugs oder an einen Gespannbetrieb angepaßt werden, indem bei höherer Last eine höhere Verstärkung gewählt wird.

Zur Lösung der oben genannten Aufgabe wird erfindungsgemäß ein elektromechanischer Bremskraftverstärker vorgeschlagen, der sich insbesondere dadurch auszeichnet, daß der Mitnehmer unmittelbar an der Kolbenstange vorgesehen ist.

Auf diese überraschend einfache Art und Weise gelingt die Modularisierung des elektromechanischen Bremskraftverstärkers. Damit kann in der Serienfertigung von Kraftfahrzeugen, unabhängig vom ausgewählten Verbrennungsmotor, der gleiche Hauptbremszylinder mit anschließendem Bremssystem eingesetzt werden. Bei Motoren, welche keinen ausreichenden Unterdruck erzeugen, läßt sich anstelle eines mit Unterdruck arbeitenden Bremskraftverstärkers der erfindungsgemäße, elektromechanische Bremskraftverstärker einbauen, ohne daß dies mit einem zusätzlichen Anpassungsaufwand verbunden wäre. Der erfindungsgemäße Bremskraftverstärker ist ohne weiteres an herkömmliche Hauptbremszylinder anschließbar.

Dabei kann der Mitnehmer kalottenförmig oder konvex ausgebildet sein. Die kalottenförmige oder konvexe Form dient dazu, die Winkelbewegungen der Kolbenstange in Abhängigkeit des Pedalwegs auszugleichen.

Die Modularisierung kann sowohl bei einer Einbindung eines Crashsensors als auch bei der vorstehend genannten Signalerfassung und/oder -verarbeitung als zusätzliches Ausgestaltungsmerkmal vorgesehen werden.

Nachfolgend wird die Erfindung anhand eines in der Zeichnung dargestellten Ausführungsbeispiels näher erläutert. Die Zeichnung zeigt in:
- Figur 1: eine schematische Längsschnittansicht eines elektromechanischen Bremskraftverstärkers nach der Erfindung im Verbund mit einem an sich bekannten Bremssystem, und in
- Figur 2: eine Darstellung der Regelung des Elektromotors des elektromechanischen Bremskraftverstärkers.

Bei üblichen Bremskraftverstärkern liegt der Aussteuerpunkt in der Größenordnung von ca. 90-100 bar Bremsdruck. An diesem Punkt gerät der Bremskraftverstärker in Sättigung, d.h. der Bremsdruck steigt ab hier nur noch über die Fahrerfußkraft an und der Bremskraftverstärker erzeugt selbst keinen weiteren Kraftanstieg. Als Beispiel sei die Auslegung eines VW Bora V6 angesetzt (andere Fahrzeuge sind ähnlich ausgelegt): Bei einem Aussteuerpunkt von 90 bar betätigt der Fahrer das Bremspedal mit etwa 270 N Pedalkraft. Durch eine mechanische Übersetzung von 1:3,5 und einen mechanischen Wirkungsgrad von 0,8 ergibt sich eine durch den Fahrerfuß erzeugte Kraft in der Kolbenstange von 270 N x 3,5 x 0,8 = 750 N. Um einen Bremsdruck von 90 bar zu erzeugen, muß die Kolbenstange mit F = p x A = 90 bar x 4,5 cm² = 4050 N gedrückt werden. Die Differenz aus Kolbenkraft und Fußkraft muß der elektromechanische Bremskraftverstärker aufbringen, nämlich FBKV = 4050 N - 750 N = 3300 N. Ein Linearmotor mit einer entsprechenden Leistung läßt sich aufgrund seiner Größe nicht mehr im Fahrzeug unterbringen.

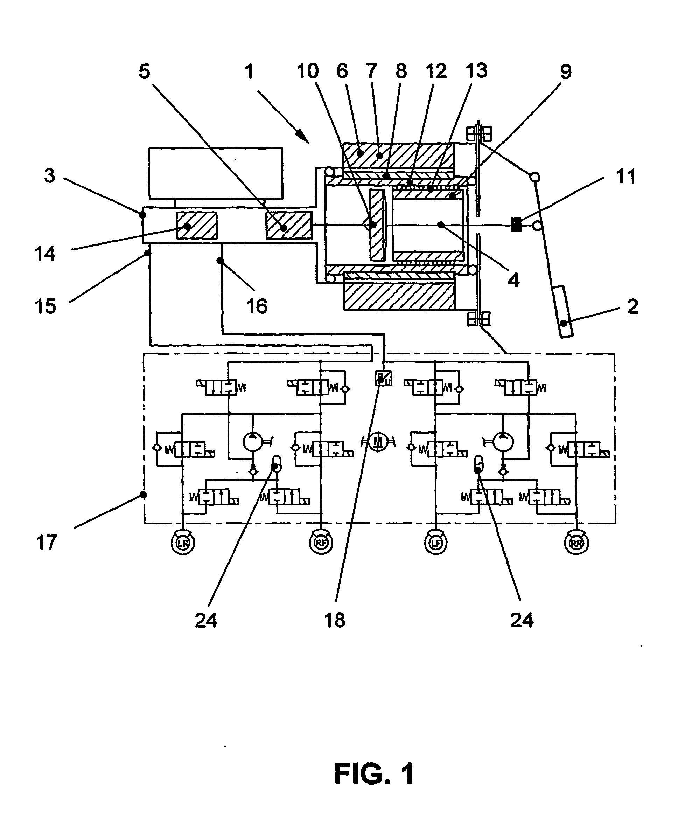

Aus diesem Grunde verwendet der in Figur 1 dargestellte elektromechanische Bremskraftverstärker 1 einen rotierenden Elektromotor und ein Rot-Trans-Getriebe, wie z. B. eine Kugelumlaufspindel oder einen Rollen-Gewindetrieb. Im Gegensatz zu einer ähnlich arbeitenden elektromechanischen Bremse mit einer Spannkraft an der Vorderachse von ca. 40 kN ist für den Bremskraftverstärker je nach Fahrzeuggröße eine Spannkraft in der Größenordnung von lediglich 1/10 erforderlich. Bei diesen Anforderungen kann im Vergleich zu einer elektromechanischen Bremse aus Kosten-, Gewichts- und Bauraumgründen auf ein Zwischengetriebe verzichtet werden. Vielmehr kann der Elektromotor das Rot-Trans-Getriebe direkt antreiben und damit auch kleiner als in einer elektromechanischen Bremse bauen. Aus den technischen Daten läßt sich für den elektromechanischen Bremskraftverstärker ein Außendurchmesser von etwa 100 mm abschätzen.

Das Ausführungsbeispiel in Figur 1 zeigt den elektromechanischen Bremskraftverstärker 1 im Einbauzustand zwischen einem Bremspedal 2 und einem Tandem-Hauptbremszylinder 3. Dabei weist der elektromechanische Bremskraftverstärker 1 eine durchgängige Kolbenstange 4 zur direkten Verbindung des Bremspedals 2 mit einem Primärkolben 5 des Hauptbremszylinders 3 auf.

Weiterhin weist der elektromechanische Bremskraftverstärker 1 einen bürstenfreien elektrischen Motor 6 mit einem Stator 7 und einem Rotor 8 auf, die konzentrisch um die Kolbenstange 4 angeordnet sind. Ein ebenfalls koaxial zu der Kolbenstange 4 angeordneter Spindeltrieb umfaßt eine drehfest gelagerte, jedoch axial bewegbare Spindelschraube 9, welche über den Rotor 8 des Motors 6 angetrieben ist. Bei Aktivierung des Motors 6 zur Bremskraftverstärkung läuft die Spindelschraube 9 gegen einen Mitnehmer 10 an. Der Mitnehmer 10 ist an seiner zu der Kolbenstange 4 weisenden Seite konvex ausgebildet, um Winkelbewegungen der Kolbenstange 4 in Abhängigkeit des Pedalwegs auszugleichen.

Im Verstärkerbetrieb drückt die Spindelschraube 9 auf den an der Kolbenstange 4 vorgesehenen Mitnehmer 10 und damit die Kolbenstage 4 mitsamt Bremspedal 2 in Richtung des Hauptbremszylinders 3, d. h. in Figur 1 nach links. Dazu wird die vom Fahrer aufgebrachte Pedalkraft mit einem Kraftsensor 11 an der Kolbenstange 4 gemessen. In Abhängigkeit der erfaßten Kraft werden die Spulen des Stators 7 des Elektromotors 6 bestromt. Infolgedessen beginnt der Rotor 8, der hier mit Permanentmagneten versehen ist, zu rotieren. Ober die mit dem Rotor 8 fest verbundene oder auch einstückig ausgebildete Außenhülse 12 und Kugeln 13 des Kugelspindeltriebs bewegt sich die Spindelschraube 9 in einer Translationsbewegung in Richtung auf den Tandem-Hauptbremszylinder 3 zu. Die Spindelschraube 9 ist dazu rotationsfest, jedoch translationsfrei gegenüber dem Aufbau gelagert. Sobald die Spindelschraube 9 den Mitnehmer 10 berührt, drückt sie diesen zusammen mit der Fußkraft der Kolbenstange 4 auf den Primärzylinder 5. Ein Schwimmkolben 14 überträgt in bekannter Weise den Druck vom Primärkreis in den Sekundärkreis des Bremssystems. An die zugehörigen Ausgänge 15 und 16 des Tandem-Hauptbremszylinders 3 ist eine bekannte ESP-Hydraulikeinheit 17, wie z. B. das System 8.0 der Fa. Bosch angeschlossen. Die ESP-Hydraulikeinheit 17 umfaßt einen Drucksensor 18, mit dem der an ihrem Einlaß anliegenden Vordruck erfaßt wird.

Sollte der elektromechanische Bremskraftverstärker 1 nicht arbeiten oder stromlos werden, kann der Fahrer mit seinem Fuß die Bremse allein betätigen. Da der Mitnehmer 10 lediglich Druckkräfte überträgt, stört der elektromechanische Bremskraftverstärker 1 hierbei nicht.

Im Gegensatz zu Unterdruck-Bremskraftverstärkem arbeitet der elektromechanische Bremskraftverstärker 1 auch dann, wenn der Verbrennungsmotor ausgeschaltet ist. In diesem Fall erhält er seine elektrische Energie aus der Starterbatterie.

Um ein stets sicheres Reduzieren des Bremsdrucks auf Null zu ermöglichen, ist der elektromechanische Bremskraftverstärker 1 bzw. dessen Getriebe selbsthemmungsfrei ausgebildet. Andernfalls würde bei einem Stromausfall im Bremsbetrieb der elektromechanische Bremskraftverstärker 1 in der Position beim Stromausfall verharren und weiterhin Bremsdruck aufbauen. Dementsprechend ist der Spindeltrieb so ausgelegt, daß bereits durch den hydraulischen Gegendruck und/oder eine Pedalrückholfeder eine ausreichende Rückstellkraft aufgebaut wird, welche den elektromechanischen Bremskraftverstärker 1 in die Nullage zurückfährt. Es kann jedoch auch eine zusätzliche Rückholfeder am Bremskraftverstärker 1 vorgesehen werden.

Für den Motor können anstelle des oben erläuterten Motors auch ein büstenloser Gleichstrommotor, ein Drehstrommotor, ein Asynchronmotor, ein Schrittmotor oder ein konventioneller Gleichstrommotor verwendet werden. Zur Bestimmung der durch den Motor erzeugten Verstärkung wird als Systemeingangsgröße zunächst die Information benötigt, wie stark der Fahrer ohne Hilfe der Verstärkung bremsen möchte. Hierzu kann im Prinzip der Pedalweg oder die Pedalkraft des Bremspedals gemessen werden. Bevorzugt wird man die Pedalkraft auswählen, weil durch die feste Verbindung des Pedals 2 mit der Kolbenstange 4 der Pedalweg immer die Verschiebung aus Fußkraft und Verstärkerkraft repräsentieren würde. Auch wäre bei Ausfall eines hydraulischen Kreises des Tandem-Hauptbremszylinders 3 das Pedal 2 nach vorne verschwenkt und würde fälschlicherweise einen Bremswunsch des Fahrers signalisieren.

Für einen reinen Vorsteuerbetrieb wird ein festes Verhältnis aus Fußkraft F_{F} und Verstärkerkraft Fᵥ vorgegeben. Dazu wird z. B. der Strom i des Elektromotors 6 proportional zur Fahrerfußkraft F_{F} eingestellt. Wie unten noch näher erläutert wird, kann der Proportionalitätsfaktor k in Abhängigkeit von der Geschwindigkeit und/oder der Beladung verändert werden. Er muß nicht notwendigerweise konstant sein, sondern kann bei hohen Pedalkräften oder hohen Pedalgeschwindigkeiten erhöht werden, wie z. B. bei einer Panikbremsung oder mit einem Bremsassistent.

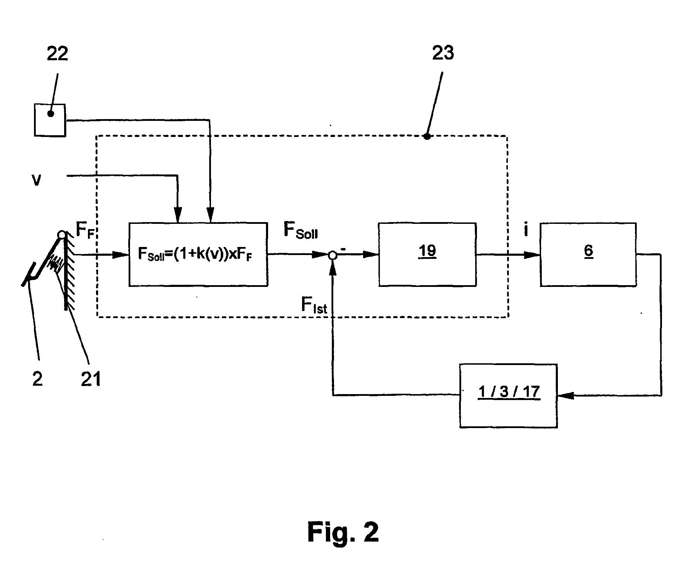

Alternativ kann an dem elektromechanischen Bremskraftverstärker 1 auch eine Kraftregelung vorgesehen werden, wie dies in Figur 2 dargestellt ist. In diesem Fall wird ein weiterer Sensor benötigt, der die Ist-Summenkraft F_{Ist} aus Fußkraft F_{F} und Verstärkerkraft Fᵥ mißt, oder aber nur die Verstärkerkraft Fᵥ allein. Bevorzugt wird hierzu das Signal des Vordrucksensors 18 der ESP-Einheit 17 verwendet, dessen gemessener Druck proportional zur Ist-Summenkraft F_{Ist} ist. Aus Sicherheitsgründen kann zwecks Redundanz im zweiten Bremskreis ebenfalls ein Bremsdrucksensor eingebaut sein, auf den bei Ausfall des ersten Kreises zurückgegriffen wird.

Bei der Regelung wird die Fußkraft F_{F} des Fahrers mit dem Sensor 11 gemessen. Diese wird mit einem gegebenenfalls variablen Verstärkungsfaktor k bzw. k(v) multipliziert. Die Summe aus Fahrerfußkraft F_{F} und Verstärkungskraft Fᵥ ist der Regelungssollwert F_{Soll}. Istwert ist die tatsächliche Summenkraft F_{Ist} oder eine aus dem ESP-Vordruck errechnete Kraft. Aus beiden kann die Regeldifferenz bestimmt werden. Die elektrische Leistung des Elektromotors 6 wird über einen Regler 19 gemäß der Regeldifferenz geregelt.

Die Bremskraftverstärkung k ist im Vorsteuerbetrieb und im Regelungsbetrieb variabel möglich. So kann beispielsweise in Abhängigkeit der Fahrgeschwindigkeit bei hohen Fahrgeschwindigkeiten eine hohe Verstärkung k(v) eingestellt werden. Damit erhält der Fahrer das Gefühl einer kräftig zupackenden, gut verzögernden Bremse. Bei niedrigen Fahrgeschwindigkeiten, insbesondere beim Parkieren, kann die Verstärkung k(v) verringert werden, um die Feindosierbarkeit für den Fahrer zu verbessern. Etwaige Fehler in der Bremsanlage können durch eine leichte Verringerung des Verstärkungsfaktors (z. B. von 5 auf 4) dem Fahrer angezeigt werden. Er wird dies dadurch bemerken, daß er für die gleiche Abbremsung eine höhere Pedalkraft aufbringen muß. Alternativ kann der Verstärkungsfaktor k leicht pulsieren.

Der elektromechanische Bremskraftverstärker 1 kann außerdem als komfortable Fremdkraftbremsanlage benutzt werden, d. h. der Elektromotor 6 kann eine Bremsung auslösen und regeln, ohne daß der Fahrer das Bremspedal überhaupt betätigt. Unabhängig von der Betätigung durch den Fahrerfuß kann durch eine erhöhte oder verringerte Verstärkung k der Gesamtbremsdruck stufenlos erhöht oder abgesenkt werden. Die Verstärkung k kann im Minimalfall auf Null abgesenkt werden, da bei einer negativen Kraft der Spindelschraube 9 diese vom Mitnehmer 10 abhebt und Zugkräfte nicht übertragen werden. Alle Bremszusatzfunktionen einer EHB, die mit einer konventionellen Bremsanlage aus technischen oder Komfortgründen nicht darstellbar sind, sind hier darstellbar, solange nicht, wie beim ESP, in die Bremskraftverteilung zwischen den einzelnen Rädern LR, RF, LF und RR eingegriffen wird, sondern lediglich eine globale Vorgabe des Bremsdrucks für alle vier Räder LR, RF, LF und RR erwünscht ist. Insbesondere sind komfortabel darstellbar:
- ein Smart-Stop (Verringerung des Bremsrucks beim Übergang in den Stillstand),
- ein Trockenbremsen der Bremsen bei Nässe, und
- eine Anfahrhilfe/Drive-Off-Assist am Berg.

Der elektromechanische Bremskraftverstärker 1 kann beim ESP-Eingriff bei niedrigen Temperaturen die erhöhte Viskosität der Bremsflüssigkeit ausgleichen wie bislang ein aktiver Bremskraftverstärker bei dem System ESP MK20 von Conti-Teves. Alternativ kann die Vorladepumpe einer Bosch 5.7 ersetzt werden, ohne daß es zu Performanceeinbußen kommt. Durch geschickte Ansteuerung der Einlaß- und Auslaßventile im ESP kann der Eingriff auf ausgewählte Räder beschränkt werden.

Auch kann z. B. bei Beladung oder im Gespannbetrieb die Verstärkung k erhöht werden. Damit ist gegenüber dem leeren Fahrzeug durch eine reine Vorsteuerung in Abhängigkeit von der geschätzten Masse des Fahrzeugs bzw. des Zuges immer die gleiche Pedalkraft-Verzögerungs-Funktion darstellbar.

Viele Funktionen einer EHB sind darstellbar, ohne daß deren Pumpen-Speicher-Einheit benötigt wird. Auch werden keine analogisierten Ventile mit Raddrucksensoren an jedem Rad benötigt. Die notwendige Druckregelung kann über eine Regelung des mit dem Sensor 18 gemessenen ESP-Vordrucks erfolgen. Hierbei wird die Verstärkerkraft so eingeregelt, daß der vom Verstärker und Fahrerfuß erzeugte Vordruck so groß ist, daß er dem Maximum aller vier gewünschten Raddrücke entspricht. An den drei übrigen Rädern können über ein Druckmodell geregelt durch Takten ihrer Ventile geringere Raddrücke eingestellt werden.

Der elektromechanische Bremskraftverstärker 1 ermöglicht es weiterhin, das Bremssystem bei einem Frontalcrash künstlich nachgiebig zu machen. Dazu kann, ausgelöst durch einen Crashsensor 22, z. B. einen Airbagsensor, durch den elektromechanischen Bremskraftverstärker 1 Druck im Bremssystem aufgebaut werden. Bei einem Unfall werden die Kolbenstange 4 und das Bremspedal 2 nach vorne gezogen. Das Pedal 2 gibt für den Fahrerfuß damit nach und kann die Verletzungsschwere am Bein reduzieren. Zusätzlich wird das Fahrzeug künstlich und über den eigentlichen Unfall hinaus weiter verzögert, um das Risiko eventueller Sekundärkollisionen zu vermindern. Der Druck kann anschließend über eine Rampe wieder abgebaut werden, so daß sich das Pedal 2 langsam wieder in seine Nullage zurückbewegt.

Durch eine leicht geänderte Verbohrung innerhalb der ESP-Einheit 17 können in diesem Betriebszustand die Niederdruckspeicher 24 der ESP-Einheit 17 als zusätzliche Elastizitäten mit benutzt werden. Die Bremsflüssigkeit wird so leichter verdrängt, wodurch das Bremspedal weiter nach vom schwenkt.

Die Ansteuerung des elektromechanischen Bremskraftverstärkers 1 kann vom ESP-Steuergerät direkt erfolgen, oder aber auch mittels eines eigenen Bremskraftverstärker-Steuergeräts 23. Vorzugsweise werden die notwendigen Berechnungen zur Ansteuerung des Elektromotors 6 von einem der Prozessoren des ESP-Steuergeräts vorgenommen.

Ein wesentlicher Vorteil der vorstehend erläuterten Erfindung besteht darin, daß der erfindungsgemäße elektromechanische Bremskraftverstärker 1 keine Modifikationen an den bisher verwendeten Bremssystemen erfordert. Vielmehr kann der gesamte konventionelle Bremsenteil mit ESP so bleiben, wie er heute ist. Eingriffe in die Hydraulik sind nicht nötig. Der erläuterte Bremskraftverstärker 1 ist als Modul an herkömmliche Hauptbremszylinder anschließbar. Er ist in seinen Außenabmessungen kompakt und weist einen einfachen Aufbau auf. Jedoch ist die Erfindung nicht auf das dargestellte Ausführungsbeispiel beschränkt, sondern umfaßt alle in den Patentansprüchen angegeben Ausgestaltungen.

### BEZUGSZEICHENLISTE

- 1: elektromechanischer Bremskraftverstärker
- 2: Bremspedal
- 3: Hauptbremszylinder
- 4: Kolbenstange
- 5: Primärkolben
- 6: Motor
- 7: Stator
- 8: Rotor
- 9: Spindelmutter
- 10: Mitnehmer
- 11: Kraftsensor
- 12: Außenhülse
- 13: Kugel
- 14: Sekundärkolben
- 15: Ausgang des ersten Bremskreises
- 16: Ausgang des zweiten Bremskreises
- 17: Bremssystem mit ESP (elektronischem Stabilitätsprogramm)
- 18: Vordrucksensor
- 19: Regler
- 21: Pedalrückholfeder
- 22: Crashsensor
- 23: Steuergerät
- 24: Niederdruckspeicher
- F_{F}: Fußkraft
- Fᵥ: Verstärkungskraft
- F_{Soll}: Soll-Summenkraft
- F_{Ist}: Ist-Summenkraft
- i: Strom
- k: Verstärkungsfaktor
- k(v): Verstärkungsfaktor (fahrgeschwindigkeitsabhängig)
- v: Fahrgeschwindigkeit

## Patentansprüche

1. Elektromechanischer Bremskraftverstärker, umfassend:
- eine Kolbenstange (4) zwischen einem Bremspedal (2) und einem Kolben (5) eines Hauptbremszylinders (3),
- einen elektrischen Motor (6) mit einem Stator (7) und einem Rotor (8), die konzentrisch um die Kolbenstange (4) angeordnet sind, und
- einen Spindeltrieb mit einer drehfest gelagerten, axial bewegbaren Spindelschraube (9), welche über den Rotor (8) des Motors (6) angetrieben ist und bei Aktivierung des Motors (6) zur Bremskraftverstärkung in Richtung des Hauptbremszylinders (3) drückt,
**dadurch gekennzeichnet, daß**
- die Kolbenstange (4) das Bremspedal (2) mit dem Kolben (5) direkt verbindet,
- die Spindelschraube (9) bei Aktivierung des Motors (6) gegen einen an der Kolbenstange (4) vorgesehenen Mitnehmer (10) anläuft und diesen in Richtung des Hauptbremszylinders (3) drückt, und
- der Mitnehmer (10) unmittelbar an der Kolbenstange (4) vorgesehen ist.

2. Elektromechanischer Bremskraftverstärker nach Anspruch 1, **dadurch gekennzeichnet, daß** der Mitnehmer (10) konvex oder kalottenförmig ausgebildet ist.

3. Elektromechanischer Bremskraftverstärker nach Anspruch 1 oder 2, **dadurch gekennzeichnet, daß** die Ansteuerung des Motors (6) in Abhängigkeit eines Crashsensors (22) derart vorgenommen ist, daß bei einem Signal des Crashsensors (22) der Motor (6) aktiviert wird.

4. Elektromechanischer Bremskraftverstärker nach einem der Ansprüche 1 bis 3, **dadurch gekennzeichnet, daß** Niederdruckspeicher einer ABS/ESP-Einheit als Druckspeicher genutzt werden.

5. Elektromechanischer Bremskraftverstärker nach einem der Ansprüche 1 bis 4, **dadurch gekennzeichnet, daß** ein Sensor (11) zum Erfassen der Pedalkraft an der Kolbenstange (4) vorgesehen ist und der Strom des Elektromotors (6) mit einem Verstärkungsfaktor k in Abhängigkeit zur erfaßten Pedalkraft eingestellt wird.

6. Elektromechanischer Bremskraftverstärker nach einem der Ansprüche 1 bis 4, **dadurch gekennzeichnet, daß** ein Sensor (11) zum Erfassen des Pedalwegs vorgesehen ist und der Strom des Elektromotors (6) mit einem Verstärkungsfaktor k in Abhängigkeit zum erfaßten Pedalweg eingestellt wird.

7. Elektromechanischer Bremskraftverstärker nach einem der Ansprüche 1 bis 5, **dadurch gekennzeichnet, daß** ein Sensor (11) zum Erfassen der Pedalkraft F_{F} an der Kolbenstange (4) vorgesehen ist, weiterhin ein Sensor (18) zum Erfassen der Ist-Summenkraft F_{Ist} aus der Pedalkraft F_{F} und der Verstärkungskraft Fᵥ vorgesehen ist, wobei aus der Pedalkraft F_{F} ein Sollwert für die Summenkraft F_{Soll} errechnet wird und die Differenz zu der erfaßten Ist-Summenkraft F_{Ist} über den Motor (6) ausgeregelt wird.

8. Elektromechanischer Bremskraftverstärker nach Anspruch 7, **dadurch gekennzeichnet, daß** die Ist-Summenkraft F_{Ist} aus einem erfaßten Vordruck errechnet und der Vordruck mit einem Vordrucksensor (18) einer ESP-Einheit (17) erfaßt wird.

9. Elektromechanischer Bremskraftverstärker nach Anspruch 8, **dadurch gekennzeichnet, daß** je Bremskreis ein Vordrucksensor (18) vorgesehen ist.

10. Elektromechanischer Bremskraftverstärker nach einem der Ansprüche 5 bis 9, **dadurch gekennzeichnet, daß** der Verstärkungsfaktor k in Abhängigkeit der Fahrgeschwindigkeit variabel eingestellt wird, derart, daß bei niedriger Fahrgeschwindigkeit die Verstärkung k kleiner und bei hoher Fahrgeschwindigkeit die Verstärkung k höher ist.

11. Elektromechanischer Bremskraftverstärker nach einem der Ansprüche 5 bis10, **dadurch gekennzeichnet, daß** der Verstärkungsfaktor k mit zunehmender Beladung und im Gespannbetrieb erhöht wird.

12. Elektromechanischer Bremskraftverstärker nach einem der Ansprüche 5 bis 11, **dadurch gekennzeichnet, daß** der Verstärkungsfaktor k mit zunehmender Pedalkraft oder zunehmender Pedalgeschwindigkeit vergrößert wird.

13. Elektromechanischer Bremskraftverstärker nach einem der Ansprüche 1 bis 12, **dadurch gekennzeichnet, daß** der Motor (6) ein bürstenfreier Gleichstrommotor, ein Drehstrommotor oder ein Asynchronmotor ist.

14. Elektromechanischer Bremskraftverstärker nach einem der Ansprüche 1 bis 13, **dadurch gekennzeichnet, daß** der Spindeltrieb als selbsthemmungsfreier Rollen-Gewindetrieb oder Kugel-Gewindetrieb ausgebildet ist.

15. Elektromechanischer Bremskraftverstärker nach einem der Ansprüche 1 bis 14, **dadurch gekennzeichnet, daß** die Rückstellkraft für den Spindeltrieb allein durch den hydraulischen Gegendruck des Hauptbremszylinders (3) und/oder eine Pedalrückholfeder (21) erzeugt wird.

## Claims

1. Electromechanical brake booster, comprising:
- a piston rod (4) between a brake pedal (2) and a piston (5) of a main brake cylinder (3),
- an electric motor (6) with a stator (7) and a rotor (8) which are arranged concentrically around the piston rod (4), and
- a spindle drive with a spindle screw (9) which is mounted in a rotationally fixed manner, can be moved axially, is driven by means of the rotor (8) of the motor (6) and pushes in the direction of the main brake cylinder (3) when the motor (6) is activated for the purpose of boosting the brake,
**characterized in that**
- the piston rod (4) directly connects the brake pedal (2) to the piston (5),
- the spindle screw (9) strikes a driver (10), which is provided on the piston rod (4), when the motor (6) is activated, and pushes the said driver in the direction of the main brake cylinder (3), and
- the driver (10) is provided directly on the piston rod (4).

2. Electromechanical brake booster according to Claim 1, **characterized in that** the driver (10) is of convex or dome-like design.

3. Electromechanical brake booster according to Claim 1 or 2, **characterized in that** the motor (6) is actuated as a function of a crash sensor (22) in such a way that the motor (6) is activated when the crash sensor (22) produces a signal.

4. Electromechanical brake booster according to one of Claims 1 to 3, **characterized in that** low-pressure reservoirs of an ABS/ESP unit are used as pressure reservoirs.

5. Electromechanical brake booster according to one of Claims 1 to 4, **characterized in that** a sensor (11) for detecting the pedal force is provided on the piston rod (4), and the current of the electric motor (6) is adjusted with a boost factor k as a function of the detected pedal force.

6. Electromechanical brake booster according to one of Claims 1 to 4, **characterized in that** a sensor (11) for detecting the pedal travel is provided, and the current of the electric motor (6) is adjusted with a boost factor k as a function of the detected pedal travel.

7. Electromechanical brake booster according to one of Claims 1 to 5, **characterized in that** a sensor (11) for detecting the pedal force F_{F} is provided on the piston rod (4), and furthermore a sensor (18) for detecting the actual total force Fact made up of the pedal force F_{F} and the boost force Fᵥ is provided, with a setpoint value for the total force Fₛₑₜ being calculated from the pedal force F_{F}, and the difference from the detected actual total force Fact being corrected by means of the motor (6).

8. Electromechanical brake booster according to Claim 7, **characterized in that** the actual total force Fact is calculated from a detected primary pressure and the primary pressure is detected by a primary-pressure sensor (18) of an ESP unit (17).

9. Electromechanical brake booster according to Claim 8, **characterized in that** a primary-pressure sensor (18) is provided for each brake circuit.

10. Electromechanical brake booster according to one of Claims 5 to 9, **characterized in that** the boost factor k is variably adjusted as a function of the driving speed in such a way that the boost k is smaller at a low driving speed and the boost k is higher at a high driving speed.

11. Electromechanical brake booster according to one of Claims 5 to 10, **characterized in that** the boost factor k is increased as loading increases and when a trailer is attached.

12. Electromechanical brake booster according to one of Claims 5 to 11, **characterized in that** the boost factor k is increased as the pedal force increases or as the pedal speed increases.

13. Electromechanical brake booster according to one of Claims 1 to 12, **characterized in that** the motor (6) is a brushless DC motor, a three-phase AC motor or an asynchronous motor.

14. Electromechanical brake booster according to one of Claims 1 to 13, **characterized in that** the spindle drive is in the form of a non-self-locking roller screw drive or ball screw drive.

15. Electromechanical brake booster according to one of Claims 1 to 14, **characterized in that** the restoring force for the spindle drive is generated solely by the hydraulic counterpressure of the main brake cylinder (3) and/or a pedal-return spring (21).

## Revendications

1. Servofrein électromécanique comprenant :
- une bielle (4) entre une pédale de frein (2) et un piston (5) d'un maître-cylindre de frein (3),
- un moteur électrique (6) comprenant un stator (7) et un rotor (8) qui sont disposés de manière concentrique autour de la bielle (4) et
- une transmission par vis sans fin comprenant une broche filetée (9), montée de manière à ne pas pouvoir tourner et mobile dans le sens axial, pouvant être entraînée par le rotor (8) du moteur (6) et qui, lorsque le moteur (6) est activé, exerce une pression en direction du maître-cylindre de frein (3) en vue d'amplifier la force de freinage, **caractérisé en ce que**
- la bielle (4) relie la pédale de frein (2) directement avec le piston (5),
- la broche filetée (9), lorsque le moteur (6) est activé, démarre contre un élément d'entraînement (10) prévu sur la bielle (4) et pousse celui-ci en direction du maître-cylindre de frein (3) et
- l'élément d'entraînement (10) est prévu directement sur la bielle (4).

2. Servofrein électromécanique selon la revendication 1, **caractérisé en ce que** l'élément d'entraînement (10) est de forme convexe ou en forme de calotte.

3. Servofrein électromécanique selon la revendication 1 ou 2, **caractérisé en ce que** la commande du moteur (6) est effectuée en fonction d'un détecteur de collision (22) de telle sorte que le moteur (6) soit activé en présence d'un signal du détecteur de collision (22).

4. Servofrein électromécanique selon l'une des revendications 1 à 3, **caractérisé en ce que** l'accumulateur de pression utilisé est l'accumulateur à basse pression d'une unité ABS/ESP.

5. Servofrein électromécanique selon l'une des revendications 1 à 4, **caractérisé en ce qu'**il est prévu un capteur (11) pour détecter la force de la pédale sur la bielle (4) et le courant du moteur électrique (6) est réglé avec un facteur d'amplification k en fonction de la force de pédale détectée.

6. Servofrein électromécanique selon l'une des revendications 1 à 4, **caractérisé en ce qu'**il est prévu un capteur (11) pour détecter la course de la pédale et le courant du moteur électrique (6) est réglé avec un facteur d'amplification k en fonction de la course de pédale détectée.

7. Servofrein électromécanique selon l'une des revendications 1 à 5, **caractérisé en ce qu'**il est prévu un capteur (11) pour détecter la force de la pédale F_{F} sur la bielle (4), qu'il est prévu en plus un capteur (18) pour détecter la force totale réelle Fᵢₛₜ composée de la force de la pédale F_{F} et de la force amplifiée Fᵥ, une valeur de consigne pour la force totale Fₛₒₗₗ étant calculée à partir de la force de la pédale F_{F} et la différence par rapport à la force totale réelle Fᵢₛₜ détectée étant compensée par le biais du moteur (6).

8. Servofrein électromécanique selon la revendication 7, **caractérisé en ce que** la force totale réelle Fᵢₛₜ est calculée à partir d'une pression d'admission détectée et la pression d'admission est détectée avec un capteur de pression d'admission (18) d'une unité ESP (17).

9. Servofrein électromécanique selon la revendication 8, **caractérisé en ce qu'**un capteur de pression d'admission (18) est prévu pour chaque circuit de freinage.

10. Servofrein électromécanique selon l'une des revendications 5 à 9, **caractérisé en ce que** le facteur d'amplification k est réglé de manière variable en fonction de la vitesse de déplacement de telle sorte que l'amplification k soit plus faible en présence d'une vitesse de déplacement basse et que l'amplification k soit plus importante en présence d'une vitesse de déplacement élevée.

11. Servofrein électromécanique selon l'une des revendications 5 à 10, **caractérisé en ce que** le facteur d'amplification k est accru à mesure que la charge augmente et en mode traction.

12. Servofrein électromécanique selon l'une des revendications 5 à 11, **caractérisé en ce que** le facteur d'amplification k est accru à mesure que la force de la pédale augmente ou que la vitesse de la pédale augmente.

13. Servofrein électromécanique selon l'une des revendications 1 à 12, **caractérisé en ce que** le moteur (6) est un moteur à courant continu sans balais, un moteur à courant triphasé ou un moteur asynchrone.

14. Servofrein électromécanique selon l'une des revendications 1 à 13, **caractérisé en ce que** la transmission par vis sans fin est réalisée sous la forme d'une transmission à vis déroulante non autobloquante ou d'une transmission à vis à billes.

15. Servofrein électromécanique selon l'une des revendications 1 à 14, **caractérisé en ce que** la force de rappel de la transmission par vis sans fin est générée uniquement par la contre-pression hydraulique du maître-cylindre de frein (3) et/ou par un ressort de rappel de la pédale (21).
